# EUROPEAN PATENT APPLICATION

(11) **EP 1 962 482 A1**
(43) Date of publication of application: **27.08.2008**
(21) Application number: 07300813.8
(22) Date of filing: 22.02.2007
(51) Int. Cl.: H04M 1/72, H04M 1/24, G06F 3/048

(54) **Method and device to simplify menu access**

(71) Applicant: GEMPLUS, 13420 Gémenos (FR)
(72) Inventor: Ducreux, Eric c/o GEMPLUS, 13012, MARSEILLE (FR)

(57) **Abstract**

The invention relates to a method and a device to simplify menu access in order to facilitate the end-user menus browsing. More particularly, the invention relates to a method and a device for providing a friendlier and easy to use way for accessing and displaying services menus choices on end-users mobile device.
This method is based on a step of pressing a predefined sequence of at least one key without using any intermediary display (50), activating the menu availability for the end-user (40).

## Description

The invention relates to a method and a device to simplify menu access in order to facilitate the end-user menus browsing. More particularly, the invention relates to a method and a device for providing a friendlier and easy to use way for accessing and displaying menus choices on end-users mobile device.

Such menu allows final mobile terminal end-users to access services provided by mobile network operators like horoscope, news...

Unfortunately the way to access to such services menus, using a handset as a mobile terminal is most of the time not very simple and not efficient. In fact, end-users have to browse through several menus of the handset and that's not obvious for the mobile terminal end-user as those menus are not very vivid regarding the initial goal to reach the services menu.

Furthermore, the way to access services menu is different on each handset and most of the times this services menu is hidden in the depths of the mobile terminal own menus.

Nevertheless, the end-user has to go through the mobile terminal menus to retrieve the content of the services menu. If the mobile terminal end-user is in a hurry, he will avoid this time consuming effort and therefore will delay or even never use such services.

Sometimes, as disclosed in the KR20050011787 patent application belonging to SK TELECOM CO LTD, a known way of allowing access to such services menus in an easy way by the end-user is implemented via a dedicated button implemented on the handset itself.

This solution in not frequently used as it implies strong hardware and software changes on the mobile device itself so it's costly.

The above disclosed solution provides indeed a way to display services menus but the end-user has to make sure the mobile device he's buying provides such a dedicated button and the behaviour of such a functionality will change when the end-user will use another mobile device.

Some mobile terminal end-users even don't know they have such a services menu available, depending on the mobile terminal they use and consequently never access it.

The way to access such a services menu depends on the handset Man to Machine Interface (MMI), as there is no standardization defined concerning this point. Hereafter there is no way for the mobile telecommunication network operator to educate their subscriber to access such services menu, as access to the menu vary, depending on the brand and the model of the mobile device used. Depending on the handset, access to the services menu built by the mobile network operators usually necessitates a lot of buttons selections, as services menu is usually hidden among other items. Therefore user can miss the access to the useful services he's looking for.

Such services menus provided by the mobile network operators are currently embedded inside the SIM (Subscriber Identity Module) card. The items present in the services menu are arranged based on the fixed choice of the mobile network operators and are static for operator's end-users also called subscribers. Therefore it can be cumbersome for the user to access his favourite menus, if these one are placed at the bottom of the menu as an example. It is thus desirable to provide a more friendly way to manage menu items.

This purpose is achieved by way of the invention as recited in the appended claims.

Other purposes, benefits and aspects of the invention will appear through the following description, which is made in reference to the appended figures, among which:
- Figure 1 represents the screens the end-user has to scroll through with known prior art,
- Figure 2 represents the screen the end-user will see using an embodiment of the invention,
- Figure 3 is a flowchart showing a sequence of steps, according to a method in the system shown in Figure 1, and
- Figure 4 is a flowchart showing a sequence of steps, according to one method using an embodiment of the invention in the system shown in figure 2.

The invention involves a standalone dedicated application to provide an easy way for the end-user to access services menus.

According to some aspects of an embodiment of the invention, there is indeed provided a method that is implemented on a personal token such as a smart card. The application can be stored locally and reside on the personal token, also referenced as an UICC card, SIM, USIM, Mega SIM, any other smart card or an integrated chip, on the mobile device. In another embodiment, the said application can be stored on a remote server as well.

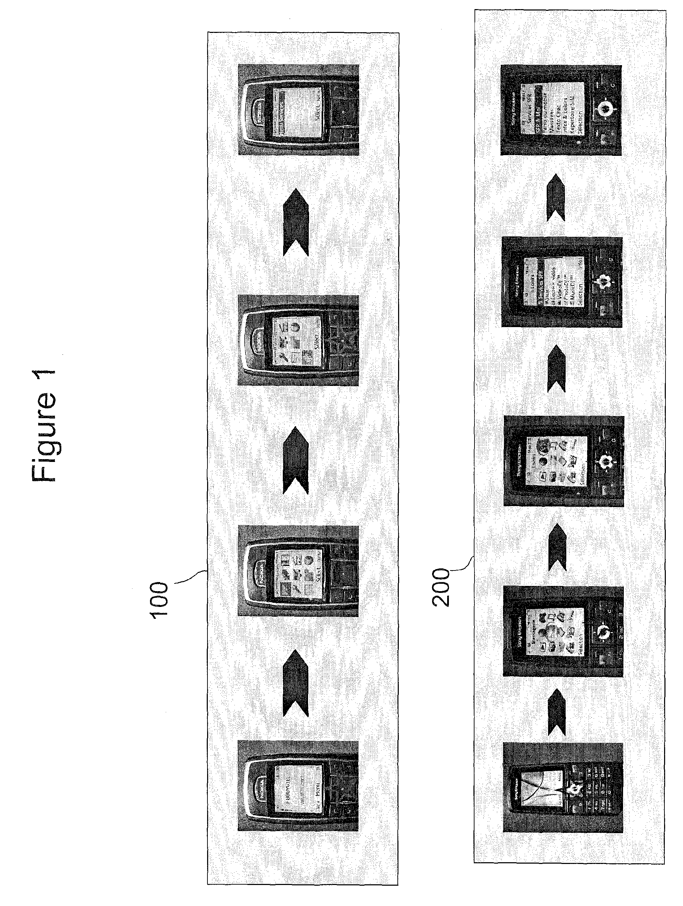

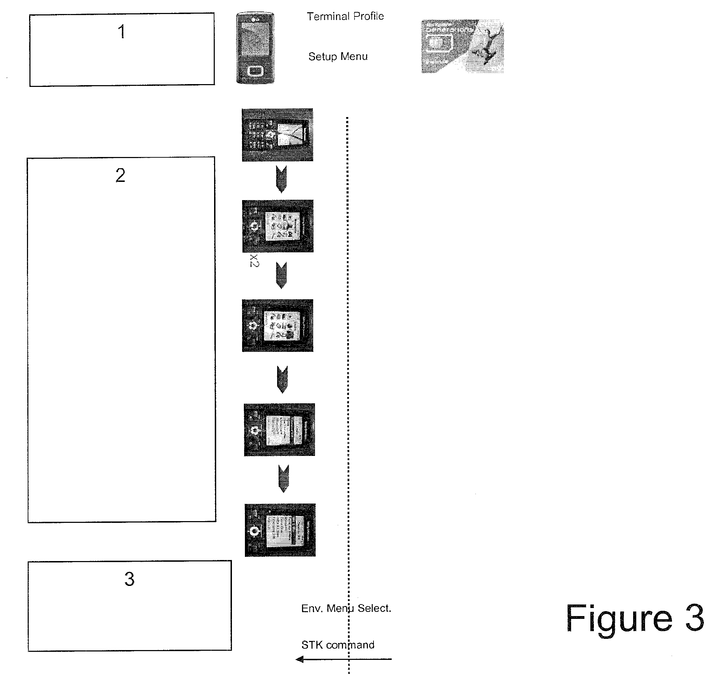

As mentioned earlier and disclosed in figures 1 and 3 illustrating the known prior art, the functionality used for such services menu management, called "setup menu", is a specific process done one time at boot stage, i.e. when the mobile device associated to the personal token is switched ON or after a software reset. The goal of this setup menu is to display to the mobile terminal end-user, usually on the screen of the handset, all the titles of applications stored in the personal token.

The personal token builds a menu items list based on, for every service, its application title, application position and identifier.

Once built, this list is displayed by the mobile terminal when the final user browses his handset menus to reach services menu.

Doing this, no event is sent to personal token about such an end-user action.

The personal token only receives an envelop menu selection when the user has already selected one of the service application, with the identifier of the selected service.

Doing so, the personal token then provides to the mobile device the sequence of commands to perform (select item, display text, send SMS...) in order to execute the said selected service, depending of the corresponding application.

According to one embodiment of the invention, a dedicated application implementing the disclosed method is stored in the personal token memory, allowing the display of the services menu, using the MMI (Man Machine Interface) of the mobile terminal.

Such an application, using dedicated SIM Toolkit commands in one preferred embodiment, is also known as an applet, or more specifically a cardlet, when implemented on a Java^{™} card type of subscriber identity module. Hereafter, this application will be referred to as an agent application. The subscriber identity module processor executes this agent application.

This dedicated application can be stored into the mobile terminal memory in another embodiment.

Figures 1 and 3 shows a sequence diagram presenting respectively the main screens the mobile terminal end-user will see when using prior art solution.

The end-user has to either push a dedicated button on the mobile terminal he's using but in this case he needs to previously read the reference manual in order to discover such a button function.

Or, in most of the cases, as only a few mobile terminals currently are implementing a dedicated button, the mobile terminal end-user has to scroll though several menus, using several dedicated screens, in order to find at the end of the day the services menu on the screen of his mobile terminal. This is done differently depending on the mobile device used as model 1 shown as 100 or model 2 shown as 200, in figure 1.

After an initialization step 1 using terminal profile and setup menu commands, in the prior art solution, the mobile terminal end-user is browsing several menus using several dedicated screens, into the handset 2 and then he access the services menu 3 and is able to select the service he wants to use.

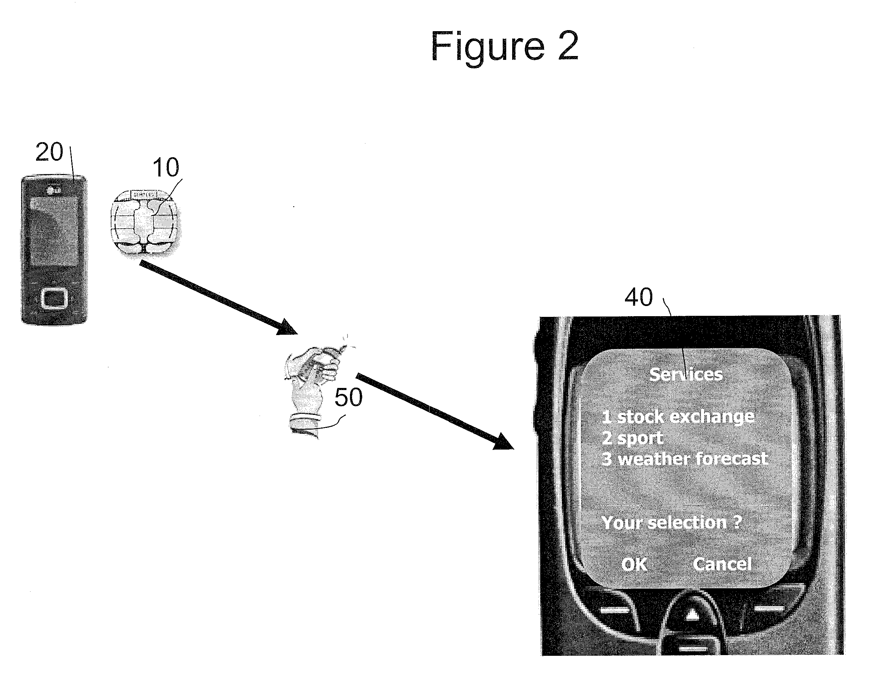

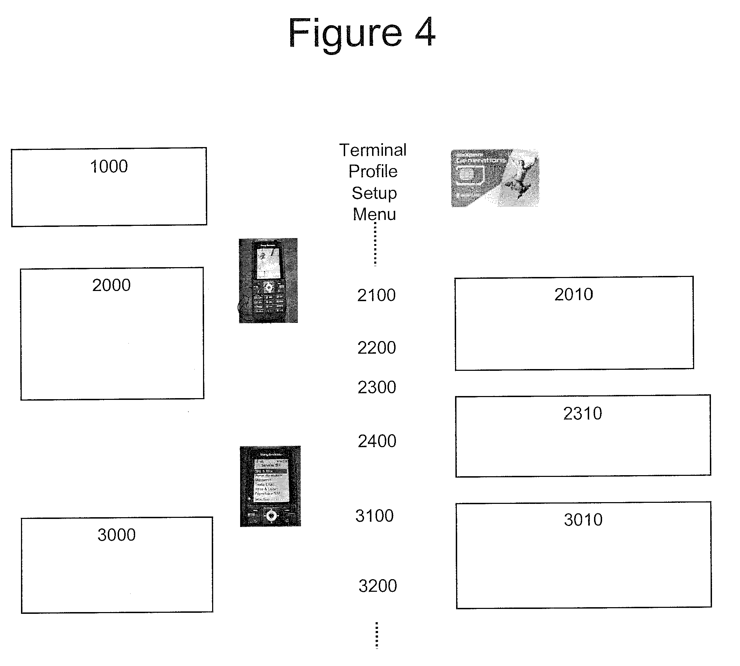

Figures 2 and 4 shows a sequence diagram presenting respectively the only screen the mobile terminal end-user will see when using an implementation of the disclosed solution and then the several steps of the method followed to implement such a solution.

Referring to Figure 2, in order to get more in details, on the mobile terminal screen 40, the end-user sees the services menu just after entering a dedicated keys sequence on the mobile MMI 50.

This dedicated keys sequence is preferably made of alphanumerical characters (included in: "0-9", "*", and "#" as an example) like "333", "12" or "9*". But this dedicated keys sequence can also be an ordered list of symbols such as bitmaps selected on a touch sensitive screen or any other entry sequence made of inputs available on the MMI of the said mobile device.

In an embodiment, the end-user press the hang up button at the end of the sequence on his mobile device 20 associated with a personal token 10.

In fact, whenever a specific phone number is dialled by the user, the personal token 10 catches the call and forces the handset 20 to display the services menu 40 directly this means that only one screen is displayed to the mobile device end-user. Departing from an initial screen which is aimed at receiving the typed sequences, either for a call or for the specific sequence, the next display is directly the services menu. The end-user is therefore displayed only one view during the typing of the sequence of keys constituting the sequence, contrary to navigation in a tree-structured progressive menu which is constituted by a series of consecutive views.

On such a keys sequence, the dedicated application (not shown) is activated and it implies directly, displaying only one screen, the services menus display 40.

The detailled implementation shown on figure 4 is based on the usage of SIM tool kit command such as setupMenu command.

Another previous step can be added, allowing the end-user to change the keys sequence he'll have to enter, in order to activate the services menu display.

These different steps include, but are not limited to, usage of usual man to machine interface as used onto mobile terminal screen. The services menu can be as well an audio menu for blind people as example.

Hereafter, an embodiment of the invention will be described wherein the end-user is using standardized SIM tool kit menus using a mobile terminal 20 associated to a subscriber identity module 10, connected via a mobile radio communication network such as GSM or 3G mobile telecommunication network.

On the said subscriber identity module, in a dedicated memory, a dedicated application is stored (not shown) .

According to one embodiment, this subscriber identity module can also be a piece of software, the dedicated said application being in this case also a piece of software.

Concerning the preferred embodiment of the disclosed invention, as shown in figure 4, and after a classical initialisation phase 1000, provided that the call control service is activated and allocated in the personal token:
As soon as the mobile terminal end-user dials a short number made of at least one digit plus a validation key (plus hang up button in a preferred embodiment) 50, the mobile terminal 20 will send an envelop call control 2100 to the personal token in order to activate the detection of activation of the embodiment of the disclosed invention.

The personal token then checks the relevancy of the said short number and makes sure it's the one chosen for services menu display 2010.

This is done as an example by a dedicated application stored in the personal token, using dedicated files stored into the personal token memory or even in the mobile terminal memory.

The said awaited key sequence can also be stored using a variable or an object of the said application.

This predefined value made of an awaited key sequence can be updated OTA (Over The Air) by the mobile network operator or changed by the mobile terminal end-user using a dedicated function of the said application or even using a dedicated service of the personal token or of the mobile terminal.

In case the entered value is the correct one, being equal to the awaited key sequence, the personal token bars the call 2200 and sends a services menu list 2300, this list being built with the items menu containing identifier of items and services titles (Text string of items) like the ones defined during set up menu 2310.

The mobile terminal then displays this services menu list on its screen 2400 so that the mobile terminal end-user can access the said services menu.

It's important to notice that from an end-user point of view during all the preceding steps on the disclosed method, the default sreen is displayed on the mobile device and the end-user will then directly seen the services menu without any other displays between those two.

When the end-user selects an item in this services menu 3100, selecting an application 3010 the personal token's Operating system activates the dedicated application the same way it's done by envelop menu selection 3010.

If the entered keys sequence doesn't match with the one dedicated to such a services menu display, the call will be allowed without modification, in a classical manner 3200. In one embodiment, the personal token will first check, using a specific file dedicated to such an embodiment of the invention, that the simplified menu access service is activated.

Such a specific file can be as an example implemented as a configuration flag.

In a preferred embodiment, the card operating system catches the predefined short number dialled using the handset man to machine interface and then forces the handset to display the services menu.

In one example just by pushing "0" and/or hang up button the mobile terminal end-user discovers the services menu, whatever the handset he uses, this services menu being displayed directly in a dedicated screen without any intermediary screens during the time the mobile terminal end-user is pushing button(s).

According to some embodiments of the disclosed method, the specific key(s) sequence that could in one way be considered as a dedicated phone number, is stored inside a dedicated part of the memory of the personal token 10.

Although the mobile terminal 20 and the subscriber identity module 10 are shown and described to be linked devices, it should not be construed to be limited as such. They can be as example two separate devices communicating using contactless channels such as infrared IrDA or ISO 14443.

Accordingly, these devices operate on networks including a public switched telephone network (PSTN), a mobile communication network, an Internet protocol (IP) network, etc.

The main advantage of this solution is that it is portable and can be used on all handsets, whatever its brand and model.

The disclosed solution is very easy to use for mobile terminal end-user as well: Access to services menu will become possible just by dialing a short number like "0*" and/or pressing the hang up button 50.

This services menu access will become very quick and efficient as only at least a dedicated key need to be pressed by the end-user; and only those actions will be performed, whatever the mobile terminal is.

## Claims

1. A method for activating a menu availability (40) on a terminal system of an end-user comprising a mobile terminal (20) and a personal token (10), said method being **characterized in that** it comprises a step of pressing a predefined sequence of at least one key without using any intermediary display (50).

2. The method according to claim 1, **characterized in that** the predefined sequence is made of at least one alphanumeric character.

3. The method according to claim 1 or 2, **characterized in that** the predefined sequence is made of two alphanumeric characters plus hang up button.

4. The method according to one of claims 1 to 3, **characterized in that** the predefined sequence is entered using the mobile device keyboard.

5. A terminal system for activating a menu availability for an end-user (40), comprising a mobile terminal (20) and a personal token (10), which terminal system being **characterized in that** it stores and runs instructions for inducing the terminal system into activating the menu availability when the end-user press a predefined sequence of at least one key this being done without using any intermediary display.

6. A personal token (10) for activating a menu availability (40) on a terminal system of an end-user, the said personal token being associated to a terminal (20),and being **characterized in that** it stores and runs instructions for inducing the terminal system into activating the menu availability when the end-user press a predefined sequence of at least one key this being done without using any intermediary display.
